# EUROPEAN PATENT SPECIFICATION

(11) **EP 0 505 187 B1**
(45) Date of publication and mention of the grant of the patent: **24.05.1995**
(21) Application number: 92302386.5
(22) Date of filing: 19.03.1992
(51) Int. Cl.: G01N 3/12

(54) **Apparatus for testing a tube for its resistance to internal pressure**
Vorrichtung zum Prüfen der Innendruckfestigkeit einer Röhre
Dispositif pour tester la résistance à la pression interne d'un tuyau

(30) Priority: 20.03.1991 JP 81786/91
(43) Date of publication of application: 23.09.1992
(73) Proprietor: NGK INSULATORS, LTD., Nagoya City Aichi Pref. (JP)
(72) Inventor: Ihara, Chikashi, Nagoya-city, Aichi-prefecture 467 (JP); Sekiguchi, Michio, Nagoya-city, Aichi-prefecture 468 (JP)
(74) Representative: Paget, Hugh Charles Edward

(56) References cited:
- EP-A- 0 002 140
- EP-A- 0 454 371
- GB-A- 1 531 557
- GB-A- 2 177 220
- US-A- 3 895 514

## Description

This invention relates to an apparatus for testing a tube for its resistance to internal pressure. Though various tubes can be tested in the apparatus according to the present invention, a β-alumina tube, which may be used as a solid electrolyte in a sodiumsulfur cell, is particularly suited to be tested in the apparatus according to the present invention.

To test strength of a β-alumina tube to resist internal pressure, one method is known in which the open end of a tube is tightly contacted with a head that provides pressurized water, and then pressurized water is passed into the tube; a tube that does not stand a specific pressure is destroyed. This method, however, has a disadvantage that it takes considerable time and cost to dry the tubes that pass the test.

To overcome this disadvantage, an apparatus for testing a tube for its strength by expanding an elastomer up to a specific pressure inside a tube to be tested, has been disclosed by the present applicants in Japanese Utility Model Application Laid Open No. 1-97241 (1989). In this apparatus it is necessary to cover an elastomer by tubes one-by-one by hand, and it is highly inconvenient to test numerous tubes continuously. Moreover, when an elastomer expands inside a tube to be tested in this apparatus, sometimes the tube is not pushed evenly but to one direction, and an area close to the open end in the tube contacts a metallic part outside the tube in the apparatus to result in scratches and damage in the area of the tube.

A further technique is known from GB-A-1 531 557. This discloses an apparatus for the proof-testing of the strength of tubes of sintered ceramic material in which a small lip is placed between the tube to be tested and an elastomeric body. The small lip is adjacent to the mouth of the tube and this lip is used to protect a weakened end portion of the ceramic tube from proof pressure.

According to the present invention, there is provided an apparatus for testing a tube for its resistance to internal pressure, comprising:
an expandable hollow elastomer body (5) with one open end;
means (8,10), connected to said expandable elastomer body (5), for providing said expandable elastomer body with a pressurized fluid medium;
means (12) for supporting a tube to be tested arranged for relative vertical movement of the tube so that said expandable body (5) is inserted into the tube; characterized by
means (17) for providing said means (12) for supporting a tube with a tube from a tube store (16); and a plastics material sheet (11) surrounding said expandable elastomer body (5) at a region thereof which is adjacent an open end of the tube to be tested in the test position, the sheet (11) being received in the tube in the test position.

The preamble of Claim 1 is known from US-A-3 895 514.

According to another aspect of the present invention, the apparatus further comprises a rotary table that is connected to at least two test heads with expandable elastomers, whereby a test head with an expandable elastomer can be replaced with another test head with an expandable elastomer.

Further details are explained below with the help of the examples illustrated in the attached drawings.

Fig. 1 is a front view of the apparatus according to the present invention.

Fig. 2 is a top view of the apparatus according to the present invention.

Fig. 3 is a cross section of a test head with an expandable elastomer.

Fig. 4 is a front view of a holder and nearby parts. The shaded portion designates that the portion shows a cross section.

Fig. 5 is a top view of a transferring mechanism.

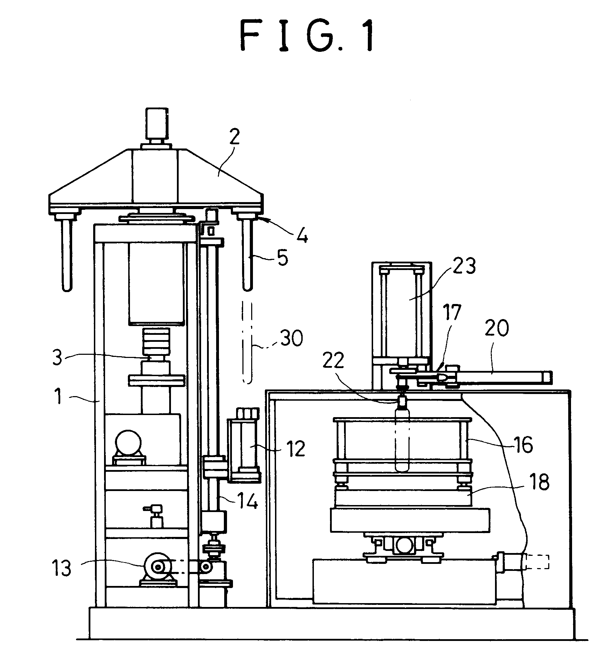

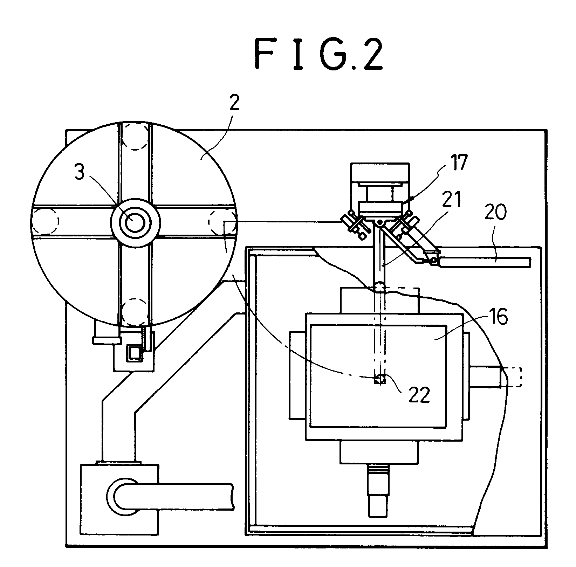

In Figs. 1 and 2 the frame of the main body is designated as 1; a rotary table 2 that rotates around a vertical shaft 3 is disposed above the frame 1; and four test heads are connected to the rotary table 2 so that they have a C₄ symmetry with its rotation axis overlapping the vertical shaft 3. In Fig. 1 the position that the test head 4 in the right side of the rotary table 2 is located at is referred to the test position, and the other three test heads 4 are located at waiting positions. In this configuration a test head 4 in a waiting position can promptly replace the test head 4 in the test position by rotating rotary table 2 when, for example, the test head 4 in the test position wears out.

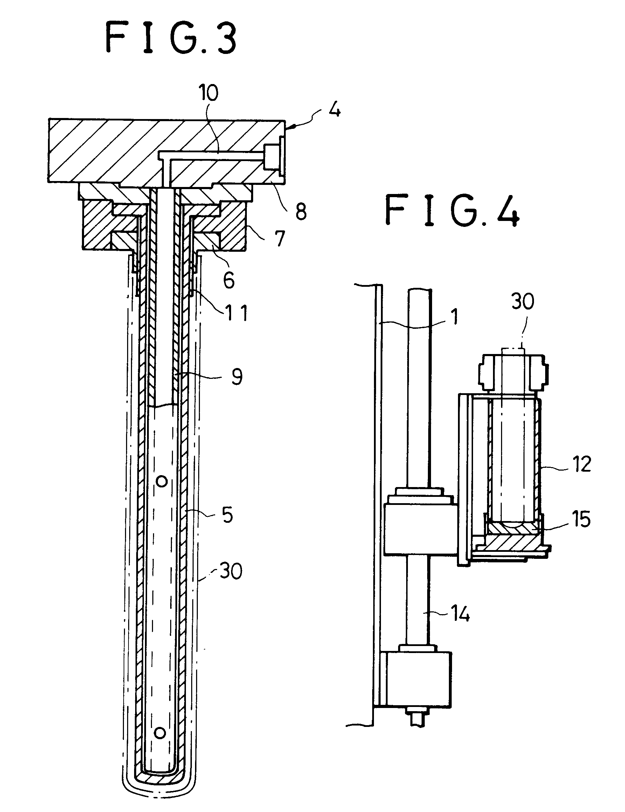

As shown in Fig. 3 a test head 4 includes a main body 8, a metallic part 6, and a metallic fitting 7. The main body 8 contains an open cavity 10 to provide an expandable elastomer 5 with pressurized fluid.

The expandable elastomer 5, which is a hollow sleeve with one open end, is attached to the main body 8 by the metallic part 6 and the metallic fitting 7 so that the hollow space of the expandable elastomer 5 is connected to the open cavity 10 in the main body 8 through a rigid tube disclosed below. In this application an expandable elastomer 5 has a shape like a slender balloon or a tube to pass into a tube 30 to be tested. However, the shape and the size of the expandable elastomer 5 can be modified according to a sample to be tested.

A rigid tube 9 having at least one hole is disposed inside the expandable elastomer 5, and the open end of the rigid tube 9 is connected to the open cavity 10 in the main body 8. After a tube 30 shown in a Broken line in Fig. 3 covers over the expandable elastomer 5, pressurized fluid provided by the open cavity 10 in the main body 8 fills the inside of the expandable elastomer 5 through holes of the rigid tube 9 to expand the expandable elastomer 5 and to exert a specific internal pressure to the tube 30. Water is preferred fluid as a medium to conduct pressure.

During a test a tube 30 is sometimes damaged in an area close to the open end by being pushed in one direction due to uneven expansion of an expandable elastomer 5. To prevent such a damage the inner side of the metallic part 6 is extended downward to some extent, and a plastic sheet 11 is inserted into the space between the extended part of the metallic part 6 and the expandable elastomer 5. The plastic sheet 11 prevents the upper part of expandable elastomer 5 covered by the sheet from uneven expansion, and thus it prevents potential damage in an area close to the open end of a tube 30.

As shown in Fig. 1, the apparatus according to the present invention contains a vertically movable holder 12 that carries a tube 30 upward and downward, and it also makes a tube 30 contact the test head 4 in the test position. This holder 12 operates by a feed screw 14 driven by a motor 13. As shown in Fig. 4, the holder 12 contains a structure like a tube with a rubber member 15 in its bottom, and this rubber member 15 supports a tube 30 without damaging it. The structure of a holder 12 can be modified according to the shape and the size of a sample to be tested. Moreover, when a tube 30 with low strength is broken during a test, this holder 12 also functions to prevent broken pieces from scattering.

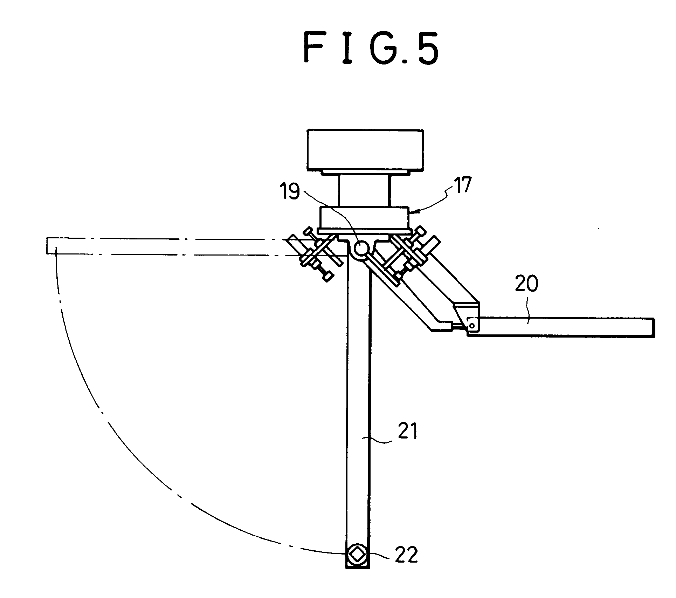

As shown in Figs. 1 and 2, beside a holder 12 is disposed a rack 16 that stores many tubes 30 and a transferring mechanism 17 that picks up a tube 30 to provide the holder 12 with tubes 30 one-by-one. The rack 16 is supported by a table 18 that can move horizontally. As shown in Figs. 2 and 5, the transferring mechanism 17 has an arm 21 that is swung 90 degrees around a shaft 19 by a cylinder 20. A chuck 22 is provided at the other end of the arm 21, and a tube 30 is held by the chuck 22. The structure and the form of chuck 22 is arbitrary. In this embodiment a rubber part is inserted into the open end of a tube 30, and then the rubber part is expanded by pressurized air so that a tube 30 is held by the friction force between the rubber part expanded and the portion of the tube in contact. An arm 21 is moved upward and downward by an elevating mechanism 23.

It will be explained how to test a tube for its strength to resist internal pressure by the apparatus according to the present invention.

First many tubes 30 are arranged in the rack 16. Then the arm 21 in the transferring mechanism 17 is moved over the rack 16, and a tube 30 is picked up by the chuck 22.

Secondly the tube 30 is transferred to a place just above the holder 12 by swinging the arm 21 by 90 degrees. At this time the holder 12 is set in a low position as shown in Fig. 1. Then the holder 12 is elevated by rotation of feed screw 14 to hold the tube 30 as shown in Fig. 4. The chuck 22 in the arm 21 releases the tube 30, and the arm swings back over the rack 16.

Thirdly the holder 12 that holds the tube 30 further elevates so that the tube 30 reaches the test head 4 in the test position as shown in Fig. 3. At the same time an expandable elastomer 5 is inserted into the tube 30. Then as disclosed before, fluid under a specific pressure provided via the open cavity 10 in the main body 8 fills the inside of the expandable elastomer 5 through holes of the rigid tube 9 to expand the expandable elastomer 5 and to exert a specific internal pressure to the tube 30. A tube 30 that does not stand the pressure is destroyed, and a tube 30 that passes the test remains as it is. The plastic sheet 11 prevents the upper part of the expandable elastomer 5 from unevenly expanding, thus preventing the tube 30 from being pushed in one direction to result in damage in a part close to the open end of the tube 30.

After the test, the holder 12 moves down to a certain extent so that the chuck 22 in the arm 21 in the transferring mechanism holds the tube 30 in the holder 12. Then the holder 12 moves down further, and the arm 21 brings back the tube to the rack 16. Then the table 18 is moved so that the arm 21 can pick up another tube 30.

When through testing many tubes a test head 4 wears or an expandable elastomer 5 deteriorates in elasticity, a test head 4 provided with pressurized fluid in a waiting position can promptly replace the test head 4 in the test position by rotating the rotary table 2. In this way tests can be continued with minimum interruption.

The apparatus according to the present invention can automatically and continuously test numerous tubes for its strength to resist internal pressure, overcoming disadvantages of the non-automatic, non-continuous apparatus previously disclosed. In addition to this feature, the apparatus as defined in claim 2 prevents potential damage in an area close to the open end of a tube to be tested by a plastic sheet surrounding an upper part of an expandable elastomer. Moreover, the apparatus in claim 3 enables to smoothly replace a test head 4 with an expandable elastomer with another test head 4 with an expandable elastomer with minimum interruption in a testing operation.

## Claims

1. An apparatus for testing a tube (30) for its resistance to internal pressure, comprising:
an expandable hollow elastomer body (5) with one open end;
means (8,10), connected to said expandable elastomer body (5), for providing said expandable elastomer body with a pressurized fluid medium;
means (12) for supporting the tube (30) to be tested arranged for relative vertical movement of the tube (30) so that said expandable body (5) is inserted into the tube (30); characterized by
means (17) for providing said means (12) for supporting a tube (30) with a tube (30) from a tube store (16); and a plastics material sheet (11) surrounding said expandable elastomer body (5) at a region thereof which is adjacent an open end of the tube (30) to be tested in the test position, the sheet (11) being received in the tube (30) in the test position.

2. An apparatus according to claim 1 having a plurality of holders (4) for a plurality of said elastomer bodies (5) respectively, whereby the elastomer body (5) cooperating with said tube supporting means (12) is exchangeable.

3. An apparatus according to claim 1 or claim 2 wherein said means for providing pressurized fluid comprises a main body having a passage connected to the open end of said expandable elastomer body (5) and said tube supporting means (12) includes means for vertically moving a tube comprising a vertical feed screw (14), a holder (12) for holding a tube movably connected to said vertical feed screew (14), and means for driving said vertical feed screw (14).

## Patentansprüche

1. Vorrichtung zum Prüfen der Innendruckfestigkeit einer Röhre bzw. eines Rohres (30), umfassend:
einen ausdehnbaren hohlen Elastomerkörper (5) mit einem offenen Ende;
Mittel (8,10), die mit dem ausdehnbaren Elastomerkörper (5) verbunden sind, um den ausdehnbaren Elastomerkörper mit einem unter Druck stehenden Fluidmedium zu versorgen;
Mittel (12) zum Abstützen der zu testenden Röhre bzw. des zu testenden Rohres (30), die zur relativen vertikalen Bewegung der Röhre bzw. des Rohres (30) angeordnet sind, so daß der ausdehnbare Körper (5) in die Röhre bzw. das Rohr (30) eingeführt wird, gekennzeichnet durch
Mittel (17), um die Mittel (12) zum Abstützen einer Röhre bzw. eines Rohres (30) mit einer Röhre bzw. einem Rohr (30) aus einem Röhren- bzw. Rohrspeicher (16) zu beliefern; und eine dünne Lage bzw. Platte bzw. Schicht (11) aus Kunststoffmaterial, die den ausdehnbaren Elastomerkörper (5) in einem Bereich davon umgibt, der einem offenen Ende der zu testenden Röhre bzw. des zu testendes Rohres (30) in der Testposition benachbart ist, wobei die Lage (11) in der Röhre bzw. im Rohr (30) in der Testposition aufgenommen ist.

2. Vorrichtung nach Anspruch 1, die eine Vielzahl an Haltern (4) für jeweils eine Vielzahl der Elastomerkörper (5) aufweist, wodurch der mit dem Röhren- bzw. Rohrabstützmittel (12) kooperierende Elastomerkörper (5) austauschbar ist.

3. Vorrichtung nach Anspruch 1 oder 2, worin die Mittel zum Liefern von unter Druck stehendem Fluid einen Hauptkörper umfassen, der einen mit dem offenen Ende des ausdehnbaren Elastomerkörpers (5) verbundenen Durchgang aufweist und das Röhren- bzw. Rohrabstützmittel (12) Mittel zum vertikalen Bewegen einer Röhre bzw. eines Rohres aufweist, umfassend eine vertikale Zufuhrschraube (14), einen mit der vertikalen Zufuhrschraube (14) beweglich verbundenen Halter (12) zum Halten einer Röhre bzw. eines Rohres und Mittel zum Antrieb der vertikalen Zufuhrschraube (14).

## Revendications

1. Dispositif pour tester la résistance à la pression interne d'un tuyau (30), comprenant :
un corps en élastomère creux dilatable (5) ayant une extrémité ouverte ;
un moyen (8, 10) connecté audit corps en élastomère dilatable (5) pour fournir, audit corps en élastomère dilatable, un fluide sous pression ;
un moyen (12) pour supporter le tuyau (30) à tester agencé pour un mouvement vertical relatif du tuyau (30) de manière que ledit corps dilatable (5) soit inséré dans le tuyau (30) ; caractérisé par
un moyen (17) pour donner audit moyen (12) pour supporter un tuyau (30), un tuyau (30) provenant d'une réserve de tuyaux (16) ; et une feuille en matière plastique (11) entourant ledit corps en élastomère dilatable en une région qui est adjacente à une extrémité ouverte du tuyau (30) à tester dans la position de test, la feuille (11) étant reçue dans le tuyau (30) à la position de test.

2. Dispositif selon la revendication 1 ayant un certain nombre de supports (4) pour un certain nombre de corps en élastomère (5) respectivement, ainsi le corps en élastomère (5) coopérant avec ledit moyen de support (12) du tuyau est échangeable.

3. Dispositif selon la revendication 1 ou la revendication 2 où ledit moyen pour appliquer un fluide sous pression comprend un corps principal et un passage connecté à l'extrémité ouverte dudit corps en élastomère dilatable (5) et ledit moyen supportant un tuyau (12) comporte un moyen pour déplacer verticalement un tuyau comprenant une vis d'entraînement vertical (14), un support (12) pour maintenir un tuyau connecté mobile à ladite vis d'entraînement vertical (14) et un moyen pour entraîner ladite vis d'entraînement vertical (14).
